# EUROPÄISCHE PATENTSCHRIFT

(11) **EP 1 315 639 B1**
(45) Veröffentlichungstag und Bekanntmachung des Hinweises auf die Patenterteilung: **02.11.2006**
(21) Anmeldenummer: 01971657.0
(22) Anmeldetag: 31.08.2001
(51) Int. Cl.: B60R 1/00, B60R 1/04

(54) **INNENSPIEGELEINRICHTUNG FÜR EIN KRAFTFAHRZEUG**
REARVIEW MIRROR DEVICE FOR A MOTOR VEHICLE
DISPOSITIF DE RETROVISEUR INTERIEUR AUTOMOBILE

(30) Priorität: 01.09.2000 DE 10043087
(43) Veröffentlichungstag der Anmeldung: 04.06.2003
(73) Patentinhaber: ROBERT BOSCH GMBH, 70442 Stuttgart (DE)
(72) Erfinder: WAWRA, Martin, 40470 Düsseldorf (DE)
(86) Internationale Anmeldenummer: PCT/DE2001/003289
(87) Internationale Veröffentlichungsnummer: WO 2002/018174

(56) Entgegenhaltungen:
- DE-A- 19 741 896
- DE-A- 19 845 567
- DE-U- 29 612 536
- US-A- 5 956 181
- PATENT ABSTRACTS OF JAPAN vol. 1999, no. 08, 30. Juni 1999 (1999-06-30) & JP 11 078693 A (NILES PARTS CO LTD), 23. März 1999 (1999-03-23)
- PATENT ABSTRACTS OF JAPAN vol. 015, no. 108 (E-1045), 14. März 1991 (1991-03-14) & JP 03 001690 A (MITSUBISHI ELECTRIC CORP), 8. Januar 1991 (1991-01-08)
- PATENT ABSTRACTS OF JAPAN vol. 1996, no. 02, 29. Februar 1996 (1996-02-29) & JP 07 267002 A (ARACO CORP;OTHERS: 01), 17. Oktober 1995 (1995-10-17)
- PATENT ABSTRACTS OF JAPAN vol. 013, no. 103 (E-725), 10. März 1989 (1989-03-10) & JP 63 274286 A (SEIKO EPSON CORP), 11. November 1988 (1988-11-11)
- PATENT ABSTRACTS OF JAPAN vol. 013, no. 441 (M-876), 4. Oktober 1989 (1989-10-04) & JP 01 168538 A (HONDA MOTOR CO LTD), 4. Juli 1989 (1989-07-04)

## Beschreibung

### Stand der Technik

Die Erfindung betrifft eine Innenspiegeleinrichtung für ein Kraftfahrzeug mit einer wahlweise aktivierbaren Spiegelanordnung, mit einem in die Spiegelanordnung integrierten Display und mit einer Sensorik zur Erfassung von Umgebungsinformationen in Form von Messdaten.

Eine derartige Innenspiegeleinrichtung wird in der Deutschen Offenlegungsschrift 43 22 937 beschrieben. Die Spiegelanordnung der bekannten Innenspiegeleinrichtung umfasst zwei Glasplatten. Zwischen diesen Glasplatten ist eine elektrisch ansteuerbare Displayschicht zur Darstellung von Ziffern und Buchstaben angeordnet. Auf dem Display können dem Fahrer zusätzliche Informationen, beispielsweise in Form von Messdaten, angezeigt werden, die von verschiedenen Sensoren im und am Fahrzeug erfasst werden. Die bekannte Innenspiegeteinrichtung erfüllt also neben der Funktion eines einfachen Rückspiegels noch die Funktion einer Anzeigeeinrichtung für ein Fahrer-Informationssystem.

In der Praxis erweist sich das in der DE 43 22 937 A1 beschriebene Konzept einer Innenspiegeleinrichtung als problematisch, da die auf dem Display eingeblendeten Informationen in der Regel in keinem direkten Zusammenhang mit dem aktuellen Spiegelbild stehen. Der Fahrer wird beim Erfassen der Displayanzeige vom eigentlichen Verkehrsgeschehen abgelenkt. Die dadurch bedingte verminderte Aufmerksamkeit des Fahrers kann zu gefährlichen Situationen im Straßenverkehr führen.

Aus dem Abstract JP 11-078 693 ist eine multifunktionale Anzeigevorrichtung für ein Fahrzeug gemäß dem Oberbegriff des Anspruchs 1 bekannt. Das Anzeigemodul weist einen halbtransparenten Spiegel auf, hinter dem eine Anzeige angeordnet ist. In der Anzeige kann ein Kamerabild sowie der Abstand zu einem Hindernis angezeigt werden. Die Anzeigevorrichtung ist als Rückspiegeleinrichtung in einem Fahrzeug angeordnet. Aus der US 5,15,093 ist ein automatisches Rückspiegelsystem für ein Fahrzeug bekannt, bei dem die Reflexivität des Rückspiegels in Abhängigkeit von einer Umgebungshelligkeit verringert wird. Hierzu sind an dem Innenspiegel Lichtsensoren zur Ermittlung der Umgebungshelligkeit angeordnet.

Aus der US 5,724,187 ist ein elektrochromer Spiegel bekannt, bei dem die an der Elektrode angeordnete Verspiegelung teilweise unterbrochen ist, um an dieser Stelle eine Anzeige anzuordnen.

### Vorteile der Erfindung

Mit der vorliegenden Erfindung wird vorgeschlagen, die bekannte Innenspiegeleinrichtung so auszugestalten und weiterzubilden, dass sie einen "intelligenten" Rückspiegel darstellt, indem sämtliche auf dem Display dargestellten Informationen dem Spiegelbild eines Rückspiegels unmittelbar zuordenbar sind und ggf. Zusatzinformationen zu dieser Rücksicht darstellen.

Dies wird erfindungsgemäß mit einer Innenspiegeleinrichtung der eingangs genannten Art erreicht, die dadurch gekennzeichnet ist, dass eine wahlweise aktivierbare Kamera vorgesehen ist, deren Kamerabilder auf dem Display wiedergegeben werden, und dass die Sensorik wahlweise mit der aktivierten Spiegelanordnung oder der aktivierten Kamera gekoppelt ist, so dass die Messdaten Zusatzinformationen zu dem Spiegelbild bzw. den Kamerabildern liefern.

Erfindungsgemäß ist erkannt worden, dass ein einfacher Rückspiegel die Situation hinter dem Kraftfahrzeug nicht immer hinreichend wiedergibt. Beispielsweise lassen sich der Abstand und die Geschwindigkeit eines nachfolgenden Fahrzeugs bei einem Überholvorgang nur schwer allein durch Beobachtung des Rückspiegels abschätzen. Auch beim Einparken reicht die Sicht durch den Rückspiegel oftmals nicht aus, um die Größe der Parklücke richtig einzuschätzen. Erfindungsgemäß wird deshalb vorgeschlagen, die Innenspiegeleinrichtung zusätzlich mit einer wahlweise aktivierbaren Kamera auszustatten, mit der sich die Situation hinter dem Kraftfahrzeug aus einer anderen Perspektive erfassen lässt als mit Hilfe der Spiegelanordnung. Da die Kamerabilder an derselben Stelle wiedergegeben werden wie das Spiegelbild der Spiegelanordnung, werden die Kamerabilder vom Fahrer durch Blick in den "Rückspiegel" wahrgenommen, also genauso wie das Spiegelbild der Spiegelanordnung. Da sich das Display für die Kamerabilder in einem günstigen Abstand von ca. 50 cm vom Auge des Fahrers befindet, kann der Betrachter den Kamerabildern trotz geringer Ausmaße des Displays viele Detailinformationen entnehmen. Außerdem ist die Sensorik der erfindungsgemäßen Innenspiegeleinrichtung entweder mit der Spiegelanordnung oder mit der Kamera gekoppelt, je nach dem, ob die Spiegelanordnung oder die Kamera gerade aktiviert ist. Dadurch liefert die Sensorik immer Zusatzinformationen zur aktuellen Anzeige der Innenspiegeleinrichtung, nämlich entweder zum Spiegelbild der Spiegelanordnung oder zu den Kamerabildern. Die Sensorik der erfindungsgemäßen Innenspiegeleinrichtung kann also beispielsweise die Geschwindigkeit des nachfolgenden Fahrzeugs erfassen, das im Spiegelbild der Spiegelanordnung zu sehen ist oder mit der Kamera aufgezeichnet wird. Dieser Messwert wird auf dem Display in das Spiegelbild bzw. die Kamerabilder eingeblendet, so dass der Fahrer die Geschwindigkeitsangabe ohne weiteres dem dargestellten Fahrzeug zuordnen kann. Die erfindungsgemäße Innenspiegeleinrichtung verfügt somit über eine erweiterte Rückspiegelfunktion.

Grundsätzlich gibt es verschiedene Möglichkeiten für die Kopplung zwischen Sensorik und Spiegelanordnung bzw. Kamera im Rahmen der erfindungsgemäßen Innenspiegeleinrichtung. In jedem Falle muss die Richtung der Messwerterfassung an die Ausrichtung der Spiegelanordnung bzw. der Kamera anpassbar sein. Dazu könnte die Sensorik mit einer variablen Blende versehen sein, mit der sich bestimmte Raumbereiche bei der Messwerterfassung ausblenden lassen. In einer besonders vorteilhaften Variante wird die Sensorik einfach mechanisch ausgerichtet und entsprechend der Spiegelanordnung eingestellt, wenn die Spiegelanordnung aktiviert ist, oder entsprechend der Kamera eingestellt, wenn die Kamera aktiviert ist.

Wie bereits voranstehend angedeutet, ist es von Vorteil, wenn die Sensorik der erfindungsgemäßen Innenspiegeleinrichtung mindestens einen Abstandssensor und/oder mindestens einen Geschwindigkeitssensor umfasst, da diese Sensoren beispielsweise bei Fahrten mit hohen und unterschiedlichen Geschwindigkeiten, wie z.B. auf der Autobahn oder Landstraße, und beim Überholen und Einparken dem Fahrer nützliche Zusatzinformationen liefern können. In diesem Zusammenhang erweist es sich außerdem als vorteilhaft, wenn es sich bei den Sensoren um Infrarot- oder Radarsensoren handelt, da diese insbesondere bei schlechter Sicht und Dunkelheit zuverlässiger funktionieren als das menschliche Auge.

Aufgrund eines zu geringen Abstands zum nachfolgenden Fahrzeug oder zu hoher Geschwindigkeit des nachfolgenden Fahrzeugs kann die Sensorik der erfindungsgemäßen Innenspiegeleinrichtung die Gefahr eines Auffahrunfalls erkennen. Der Fahrer kann dann mit Hilfe der erfindungsgemäßen Innenspiegeleinrichtung auch gewarnt werden, beispielsweise durch entsprechende Darstellung der Messdaten auf dem Display oder ggf. auch durch entsprechende akustische Signale, um einen Zusammenstoß durch Beschleunigung oder Fahrspurwechsel zu verhindem. Dieser Modus kann auch dann zum Einsatz kommen, wenn das nachfolgende Fahrzeug außer Kontrolle geraten ist, wie z.B. bei Nässe oder Glätte.

In einer erfindungsgemäßen Ausführung der Innenspiegeleinrichtung ist die Spiegelanordnung nicht nur wahlweise aktivierbar. Vielmehr ist die Verspiegelung der Spiegelanordnung so elektrisch variierbar, dass auch eine Teilverspiegelung bzw. Teiltransparenz der Spiegelanordnung realisierbar ist. In diesem Betriebsmodus wird zum einen die volle Funktionalität der Spiegelanordnung als Rückspiegel gewährleistet, zum anderen aber auch die Anzeige von Messdaten und textuellen Angaben über das Display im Hintergrund ermöglicht, indem die Messdaten bzw. textuellen Angaben über das Display nach Art eines Wasserzeichens in das Spiegelbild eingeblendet werden, ohne das Spiegelbild zu überdekken. Bei ausgeschalteter Verspiegelung und aktivierter Kamera werden die Messdaten bzw. textuellen Angaben zusammen mit den Kamerabildern auf dem Display dargestellt.

Die Spiegelanordnung der erfindungsgemäßen Innenspiegeleinrichtung könnte in vorteilhafter Weise zwei gegeneinander neigbare Spiegelfolien umfassen. Durch Neigung der Spiegelfolien gegeneinander und Abdunkeln der Spiegelfolien unabhängig voneinander lässt sich eine derartige Spiegelanordnung, beispielsweise bei Sonneneinfall oder grellem Scheinwerferlicht, auf elektronischem Wege, ohne mechanische Bedienung einfach abblenden. Diese Funktion kann mit Hilfe von Lichtsensoren automatisiert werden.

Bei dem Display der erfindungsgemäßen Innenspiegeleinrichtung kann es sich vorteilhafter Weise um ein farbiges LCD- oder TFT-Display handeln.

In einer vorteilhaften Ausführungsform der erfindungsgemäßen Innenspiegeleinrichtung werden die Spiegelanordnung und die Kamera automatisch aktiviert bzw. deaktiviert. Das Ein- und Ausschalten der Verspiegelung könnte in Abhängigkeit von der Fahrgeschwindigkeit automatisiert werden. So könnte die Verspiegelung bei einer positiven Fahrgeschwindigkeit von > 10 km/h zwangsläufig eingeschaltet sein, um den Fahrer nicht durch Informationen auf dem Display abzulenken. Im Stand oder beim Rückwärtsfahren wäre dann die Kamera aktiviert, die Kamerabilder würden auf dem Display wiedergegeben. Eine zusätzliche Unterstützung des Fahrers beim Rückwärtsfahren durch Einblenden von Hilfslinien ist denkbar. Die Kamera könnte auch bei Anhängerbetrieb automatisch aktiviert werden, wenn die Sicht durch die Heckscheibe nach hinten durch den Anhänger eingeschränkt ist.

Besonders vorteilhaft ist die Nutzung der erfindungsgemäßen Innenspiegeleinrichtung als Kommunikationseinheit. Dazu könnte die Innenspiegeleinrichtung zusätzlich mit einem Mikrofon und einer Lautsprechereinrichtung sowie einer drahtlosen Funkschnittstelle ausgestattet sein. Die räumliche Anordnung des Mikrofons in unmittelbarer Nähe des Innenspiegels und damit relativ nahe beim Fahrer erweist sich für die Sprachaufzeichnung als vorteilhaft. Die Funktion als Kommunikationseinheit könnte beispielsweise im Falle eines Unfalls oder auch in andersartigen Notsituationen genutzt werden. Mit Hilfe des Mikrofons und Mitteln der automatischen Spracherkennung könnten die Fahrzeuginsassen über die Funkschnittstelle einen Notruf auslösen. Auch die Kamera könnte in Notfällen bzw. bei Auslösung eines Notrufs automatisch aktiviert werden, um den Zustand des Fahrzeugs und damit den Verletzungsgrad der Insassen, das Ausmaß der Beschädigung, die Lage des Fahrzeugs, etc. aufzuzeichnen. Diese Bilddaten könnten dann ggf. zusammen mit Sprachdaten und weiteren Informationen über die Funkschnittstelle übertragen werden. Besonders vorteilhaft ist es, wenn die Innenspiegeleinrichtung bei Stillstand des Fahrzeugs als Bildtelefon nutzbar ist, die Funkschnittstelle also direkt oder indirekt über GSM kommunizieren kann. In diesem Falle könnte neben dem Mikrofon noch eine weitere manuell bedienbare Eingabevorrichtung für den Wählvorgang vorgesehen sein. Wenn die erfindungsgemäße Innenspiegeleinrichtung zusätzlich noch mit einer Datenschnittstelle zur Verbindung mit einem PC-System versehen ist, besteht auch die Möglichkeit einer Internet-Nutzung über diese Kommunikationseinheit.

Besonders vorteilhaft ist es, wenn die erfindungsgemäße Innenspiegeleinrichtung abnehmbar ist und somit auch außerhalb des Kfz als mobile Kommunikationseinheit verwendbar ist. Die voranstehend beschriebenen Funktionalitäten können dann auch außerhalb des Fahrzeugs genutzt werden. So könnte beispielsweise ein Geschäftsreisender seinen Wagen abstellen und aus einem Firmengebäude oder Hotel Bildtelefonie betreiben oder seine mails lesen. Dazu kann die Funkschnittstelle - wie bereits erwähnt - direkt über GSM kommunizieren oder auch nur mit der Hardware des Kfz, die dann aber auch ein Mobilfunkmodul umfassen muss. Die Funktionalität als Kommunikationseinheit kann in diesem Falle nur in der Funkfeldreichweite des Fahrzeugs genutzt werden.

In der mobilen Variante der erfindungsgemäßen Innenspiegeleinrichtung könnte die Halterung für die Installation im Fahrzeug bei mobiler Nutzung als Standfuß dienen. Hier könnte vorteilhafterweise auch eine eigene Spannungsversorgung für die Kommunikationseinheit untergebracht sein. Diese könnte beispielsweise mindestens einen Akkumulator umfassen, der über die Halterung der Innenspiegeleinrichtung im Fahrzeuginneren aufladbar ist.

### Zeichnungen

Wie bereits voranstehend ausführlich erörtert, gibt es verschiedene Möglichkeiten, die Lehre der vorliegenden Erfindung in vorteilhafter Weise auszugestalten und weiterzubilden. Ergänzend dazu werden nachfolgend zwei Ausführungsbeispiele der Erfindung anhand der Zeichnungen erläutert.
- Fig. 1: zeigt einen teilweise schematisierten Querschnitt durch eine erste Ausführungsform der erfindungsgemäßen Innenspiegeleinrichtung und
- Fig. 2: zeigt eine ebenfalls teilweise schematisierte, perspektivische Darstellung einer zweiten Ausführungsform der erfindungsgemäßen Innenspiegeleinrichtung.

### Beschreibung der Ausführungsbeispiele

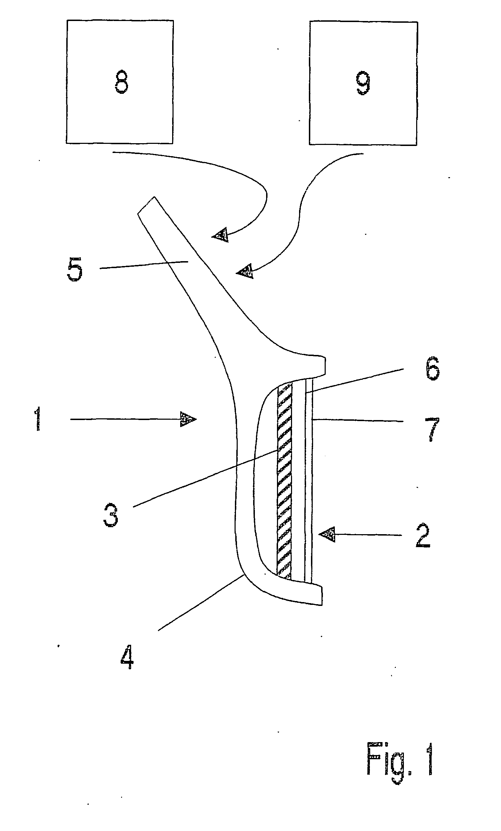

Die in Fig. 1 dargestellte Innenspiegeleinrichtung 1 für ein Kraftfahrzeug umfasst eine wahlweise aktivierbare Spiegelanordnung 2 und ein in die Spiegelanordnung 2 integriertes Display 3, die in einem Gehäuse 4 mit Haltearm 5 angeordnet sind.

Das Gehäuse 4 mit der Spiegelanordnung 2 und dem Display 3 wird über den Haltearm 5 im Fahrzeuginnenraum installiert.

Bei Bedarf kann die Verspiegelung der Spiegelanordnung 2 elektronisch variiert und insbesondere ein- und ausgeschaltet werden, so dass die Innenspiegeleinrichtung 1 wahlweise als Spiegel oder Display fungieren kann. Im hier dargestellten Ausführungsbeispiel umfasst die Spiegelanordnung 2 zwei unabhängig voneinander abdunkelbare und gegeneinander neigbare Spiegelfolien 6 und 7. Durch geeignete Neigung und Abdunklung der Spiegelfolien 6 und 7 lässt sich die Spiegelanordnung 2 ohne mechanische Bedienung rein elektronisch abblenden. Diese Funktion kann durch an geeigneter Stelle angeordnete Lichtsensoren automatisiert werden.

Desweiteren umfasst die Innenspiegeleinrichtung 1 eine Sensorik 8 zur Erfassung von Umgebungsinformationen in Form von Messdaten und eine wahlweise aktivierbare Kamera 9, wobei sowohl die Messdaten als auch die Kamerabilder auf dem Display 3 wiedergegeben werden. Die Sensorik 8 wie auch die Kamera 9 sind im hier dargestellten Ausführungsbeispiel nicht im Gehäuse 4 angeordnet, sondern an anderer für die Messwerterfassung bzw. Bildaufzeichnung geeigneter Stelle im oder am Fahrzeug. Deshalb sind sowohl die Sensorik 8 als auch die Kamera 9 hier nur schematisch dargestellt.

Die Sensorik 8 umfasst vorteilhafterweise einen Abstandssensor und einen Geschwindigkeitssensor, mit dem sich die Geschwindigkeit von nachfolgenden Fahrzeugen erfassen lässt.

Erfindungsgemäß ist die Sensorik 8 wahlweise mit der aktivierten Spiegelanordnung 2 oder der aktivierten Kamera 9 gekoppelt, so dass die Messdaten immer Zusatzinformationen zu dem Spiegelbild bzw. den Kamerabildern liefern.

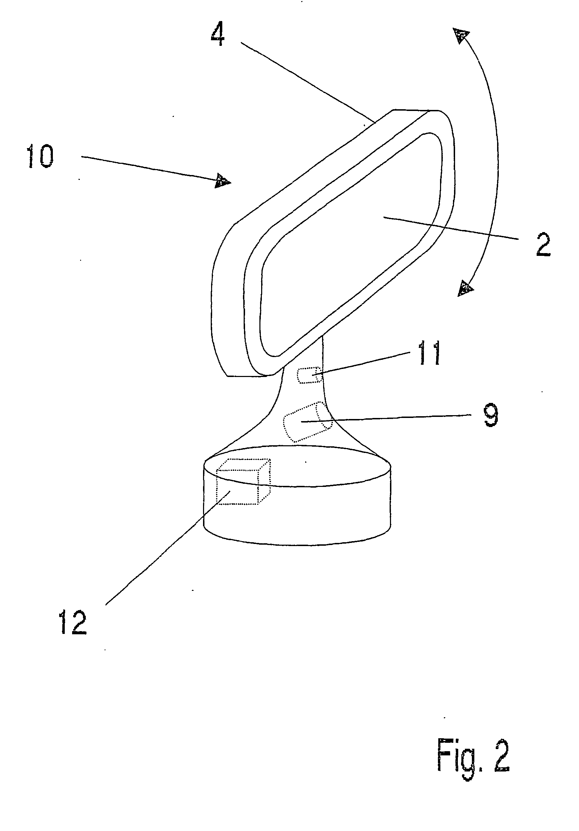

Die in Fig. 2 dargestellte Ausführungsform einer erfinduilgsgemäßen Innenspiegeleinrichtung stellt gleichzeitig eine mobile Kommunikationseinheit 10 dar, da sie einfach in eine entsprechende Halterung im Fahrzeuginnenraum einsteckbar und wieder abnehmbar ist. Genauso wie bei dem in Fig. 1 dargestellten Ausführungsbeispiel sind hier die Spiegelanordnung 2 und das Display in einem gemeinsamen Gehäuse 4 angeordnet, das schwenkbar an einem Haltearm 5 angelenkt ist. Der Haltearm 5 dient hier aber nicht nur zur Installation im Fahrzeuginnenraum sondern hat außerdem noch die Funktion eines Standfußes bei mobiler Nutzung der Kommunikationseinheit 10. In den Haltearm bzw. Standfuß 5 integriert sind eine Kamera 9, ein Mikrofon 11 und eine drahtlose Funkschnittstelle 12. Desweiteren umfasst die Kommunikationseinheit 10 eine hier nicht dargestellte Lautsprechereinrichtung, die beispielsweise auf der Rückseite der Spiegelanordnung 2 angeordnet sein kann.

Die Funkschnittstelle 12 kann auf der Basis eines Protokolls für die Funkübertragung über kurze Distanzen, wie z.B. Bluetooth, arbeiten. In diesem Falle kann die Kommunikationseinheit 10 nur in der Funkfeldreichweite des Kfz für mobile Bildkommunikation genutzt werden. Dabei wird auf die Hardware des Kfz, insbesondere ein Mobilfunkmodul, Datenspeicher, Datenbus, ggf. Sprachsteuerung etc. zugegriffen. Die Funkschnittstelle 12 kann aber auch selbst in Form eines Mobilfunkmoduls realisiert sein.

Idealer Weise ist die Kommunikationseinheit 10 noch mit einer Datenschnittstelle ausgestattet, die eine Verbindung zu einem PC-System ermöglicht. Für diese Betriebsart ist es zweckmäßig, wenn sich das Kamerabild und die Displaydarstellung automatisch umdrehen.

Vorteilhafterweise verfügt die Kommunikationseinheit 10 über eine eigene klein und leicht ausgeführte Spannungsversorgung in Form von Akkumulatoren, die ebenfalls im Haltearm bzw. Standfuß 5 untergebracht ist. Die Akkumulatoren können dann über die Halterung im Fahrzeuginnenraum aufgeladen werden, wodurch sich eine ständige Bereitschaft der Kommunikationseinheit 10 gewährleisten lässt.

## Patentansprüche

1. Innenspiegeleinrichtung für ein Kraftfahrzeug mit einer Spiegelanordnung (2), wobei in die Spiegelanordnung (2) ein Display (3) integriert ist, und mit einer Sensorik (8) zur Erfassung von Umgebungsinformationen in Form von Messdaten, wobei auf dem Display (3) Kamerabilder einer wahlweise aktivierbaren Kamera (9) wiedergegeben werden, wobei die Sensorik (8) wahlweise mit der aktivierten Spiegelanordnung (2) oder mit der aktivierten Kamera (9) derart gekoppelt ist, dass die Messdaten als Zusatzinformationen zu einem Spiegelbild oder zu den Kamerabildern angezeigt werden, **dadurch gekennzeichnet, dass** die Verspiegelung der Spiegelanordnung (2) zur wahlweisen Aktivierung der Spiegelanordnung (2) elektrisch variierbar ist, dass die Verspiegelung der Spiegelanordnung (2) derart elektrisch variierbar ist, dass eine Teilverspiegelung oder Teiltransparenz der Spiegelanordnung (2) realisierbar ist und dass die Messdaten bei der Teilverspiegelung oder Teiltransparenz der Spiegelanordnung (2) über das Display (3) in das Spiegelbild eingeblendet werden, ohne das Spiegelbild zu überdecken, und dass die Messdaten bei aktivierter Kamera (9) zusammen mit den Kamerabildern auf dem Display (3) dargestellt werden.

2. Innenspiegeleinrichtung nach Anspruch 1, **dadurch gekennzeichnet, dass** die Sensorik (8) ausrichtbar ist und entsprechend der Spiegelanordnung (2) eingestellt wird, wenn die Spiegelanordnung (2) aktiviert ist, oder entsprechend der Kamera (9) eingestellt wird, wenn die Kamera (9) aktiviert ist.

3. Innenspiegeleinrichtung nach einem der Ansprüche 1 oder 2, **dadurch gekennzeichnet, dass** die Sensorik (8) mindestens einen Abstandssensor und/oder mindestens einen Geschwindigkeitssensor umfasst.

4. Innenspiegeleinrichtung nach einem der vorhergehenden Ansprüche, **dadurch gekennzeichnet, dass** die Spiegelanordnung (2) zwei gegeneinander neigbare Spiegelfolien (6, 7) umfasst.

5. Innenspiegeleinrichtung nach einem der vorhergehenden Ansprüche, **dadurch gekennzeichnet, dass** mindestens ein Lichtsensor zum automatischen Variieren der Verspiegelung der Spiegelanordnung und/oder zum Neigen der Spiegelfolien vorgesehen ist.

6. Innenspiegeleinrichtung nach einem der vorhergehenden Ansprüche, **dadurch gekennzeichnet, dass** Mittel zum automatischen Aktivieren und Deaktivieren der Spiegelanordnung und der Kamera vorgesehen sind.

7. Innenspiegeleinrichtung nach einem der vorhergehenden Ansprüche, **dadurch gekennzeichnet, dass** Mittel zum Einblenden von Hilfslinien in das Spiegelbild oder die Kamerabilder vorgesehen sind.

8. Innenspiegeleinrichtung nach einem der vorhergehenden Ansprüche, **dadurch gekennzeichnet, dass** ein Mikrofon (11) und eine Lautsprechereinrichtung vorgesehen sind und dass eine drahtlose Funkschnittstelle (12) vorgesehen ist.

9. Innenspiegeleinrichtung nach Anspruch 8, **dadurch gekennzeichnet, dass** die Funkschnittstelle (12) über GSM kommuniziert, so dass die Innenspiegeleinrichtung als Bildtelefon verwendbar ist.

10. Innenspiegeleinrichtung nach einem der Ansprüche 8 oder 9, **dadurch gekennzeichnet, dass** eine Datenschnittstelle zur Verbindung mit einem PC-System vorgesehen ist.

11. Innenspiegeleinrichtung nach einem der Ansprüche 8 bis 10, **dadurch gekennzeichnet, dass** die Innenspiegeleinrichtung (1) abnehmbar ist uns somit auch außerhalb des Kraftfahrzeugs als mobile Kommunikationseinheit (10) verwendbar ist.

12. Innenspiegeleinrichtung nach Anspruch 11, **dadurch gekennzeichnet, dass** die Funkschnittstelle mit der Hardware des Kraftfahrzeugs kommuniziert.

13. Innenspiegeleinrichtung nach Anspruch 11 oder 12, **dadurch gekennzeichnet, dass** eine eigene Spannungsversorgung vorgesehen ist.

14. Innenspiegeleinrichtung nach Anspruch 13, **dadurch gekennzeichnet, dass** die Spannungsversorgung mindestens einen Akkumulator umfasst, der über die Halterung der Innenspiegeleinrichtung im Fahrzeuginneren aufladbar ist.

## Claims

1. Interior rearview mirror device for a motor vehicle having a mirror arrangement (2), a display (3) being integrated in the mirror arrangement (2), and having a sensor system (8) for acquiring ambient information in the form of measured data, camera images of an optionally activatable camera (9) being reproduced on the display (3), the sensor system (8) optionally being coupled to the activated mirror arrangement (2) or to the activated camera (9) in such a way that the measured data are displayed as information additional to a mirror image or to the camera images, **characterized in that** the silvering of the mirror arrangement (2) can be varied electrically for the purpose of optionally activating the mirror arrangement (2), **in that** the silvering of the mirror arrangement (2) is electrically variable in such a way that a partial silvering or partial transparency of the mirror arrangement (2) can be implemented, and **in that** in the case of partial silvering or partial transparency of the mirror arrangement (2), the measured data are inserted into the mirror image via the display (3) without covering the mirror image, and **in that**, in the case of an activated camera (9), the measured data are represented on the display (3) together with the camera images.

2. Interior rearview mirror device according to Claim 1, **characterized in that** the sensor system (8) can be aligned, and is set in accordance with the mirror arrangement (2) when the mirror arrangement (2) is activated, or is set in accordance with the camera (9) when the camera (9) is activated.

3. Interior rearview mirror device according to either of Claims 1 and 2, **characterized in that** the sensor system (8) comprises at least one distance sensor and/or at least one speed sensor.

4. Interior rearview mirror device according to one of the preceding claims, **characterized in that** the mirror arrangement (2) comprises two mutually inclinable reflective films (6, 7).

5. Interior rearview mirror device according to one of the preceding claims, **characterized in that** at least one light sensor is provided for automatically varying the silvering of the mirror arrangement and/or for inclining the reflective films.

6. Interior rearview mirror device according to one of the preceding claims, **characterized in that** means are provided for automatically activating and deactivating the mirror arrangement and the camera.

7. Interior rearview mirror device according to one of the preceding claims, **characterized in that** means are provided for inserting auxiliary lines into the mirror image or the camera images.

8. Interior rearview mirror device according to one of the preceding claims, **characterized in that** a microphone (11) and a loudspeaker device are provided, and **in that** a wireless radio interface (12) is provided.

9. Interior rearview mirror device according to Claim 8, **characterized in that** the radio interface (12) communicates via GSM such that the interior rearview mirror device can be used as a videophone.

10. Interior rearview mirror device according to either of Claims 8 and 9, **characterized in that** the data interface is provided for connecting to a PC system.

11. Interior rearview mirror device according to one of Claims 8 to 10, **characterized in that** the interior rearview mirror device (1) is removable and can thus also be used outside the motor vehicle as a mobile communications unit (10).

12. Interior rearview mirror device according to Claim 11, **characterized in that** the radio interface communicates with the hardware of the motor vehicle.

13. Interior rearview mirror device according to Claim 11 or 12, **characterized in that** a dedicated power supply is provided.

14. Interior rearview mirror device according to Claim 13, **characterized in that** the power supply comprises at least one rechargeable battery which can be charged via the holder of the interior rearview mirror device in the vehicle interior.

## Revendications

1. Rétroviseur intérieur pour un véhicule automobile, comprenant un dispositif de miroir (2) muni d'un écran (3), et des capteurs (8) pour détecter des informations d'environnement sous forme de données de mesure, avec des images d'une caméra (9) activable au choix reproduites sur l'écran (3), les capteurs (8) étant couplés au choix avec le dispositif de miroir (2) ou la caméra (9) activée, de sorte que les données de mesure sont affichées sous forme d'informations pour compléter une image réfléchie ou des images de caméra,
**caractérisé en ce que**
la réfléction du dispositif de miroir (2) est variable électriquement pour pouvoir réaliser une réfléction partielle ou une transparence partielle du dispositif de miroir (2), et
lors de la réfléction partielle ou de la transparence partielle du dispositif de miroir (2), les données de mesure sont affichées par l'écran (3) dans l'image refléchie sans masquer celle-ci, et
lorsque la caméra (9) est activée les données de mesure sont représentées sur l'écran (3) conjointement avec les images de caméra.

2. Rétroviseur intérieur selon la revendication 1,
**caractérisé en ce que**
les capteurs (8) sont orientables et réglés en fonction du dispositif de miroir (2) lorsque celui-ci est activé, ou en fonction de la caméra (9) lorsque celle-ci est activée.

3. Rétroviseur intérieur selon l'une quelconque des revendications 1 ou 2,
**caractérisé en ce que**
les capteurs (8) comprennent au moins un capteur de distance et/ou au moins un capteur de vitesse.

4. Rétroviseur intérieur selon l'une quelconque des revendications précédentes,
**caractérisé en ce que**
le dispositif de miroir (2) comprend deux feuilles réfléchissantes (6, 7) pouvant être inclinées l'une par rapport à l'autre.

5. Rétroviseur intérieur selon l'une quelconque des revendications précédentes,
**caractérisé en ce qu'**
au moins un capteur de lumière est prévu pour varier automatiquement la réfléction du dispositif de miroir et/ou incliner les feuilles réfléchissantes.

6. Rétroviseur intérieur selon l'une quelconque des revendications précédentes,
**caractérisé en ce que**
des moyens sont prévus pour activer et désactiver automatiquement le dispositif de miroir et la caméra.

7. Rétroviseur intérieur selon l'une quelconque des revendications précédentes,
**caractérisé en ce que**
des moyens sont prévus pour afficher des lignes d'aide dans l'image reflétée ou les images de caméra.

8. Rétroviseur intérieur selon l'une quelconque des revendications précédentes,
**caractérisé en ce qu'**
un microphone (11) et un dispositif de haut-parleurs sont prévus ainsi qu'une interface radio sans fil (12).

9. Rétroviseur intérieur selon la revendication 8,
**caractérisé en ce que**
l'interface radio (12) communique par GSM pour pouvoir utiliser le rétroviseur comme téléphone à image.

10. Rétroviseur intérieur selon l'une quelconque des revendications 8 ou 9,
**caractérisé en ce qu'**
une interface de données est prévue pour la connexion à un système de PC.

11. Rétroviseur intérieur selon l'une quelconque des revendications 8 à 10,
**caractérisé en ce que**
le rétroviseur (1) est amovible et peut ainsi également être utilisé à l'extérieur du véhicule automobile comme unité de communication mobile (10).

12. Rétroviseur intérieur selon la revendication 11,
**caractérisé en ce que**
l'interface radio communique avec le matériel informatique du véhicule automobile.

13. Rétroviseur intérieur selon la revendication 11 ou 12,
**caractérisé en ce qu'**
il dispose de sa propre alimentation en tension.

14. Rétroviseur intérieur selon la revendication 13,
**caractérisé en ce que**
l'alimentation en tension comprend au moins un accumulateur qui peut être rechargé par l'intermédiaire du support du dispositif de rétroviseur intérieur dans le véhicule.
